# EUROPEAN PATENT APPLICATION

(11) **EP 2 057 963 A1**
(43) Date of publication of application: **13.05.2009**
(21) Application number: 08019352.7
(22) Date of filing: 05.11.2008
(51) Int. Cl.: A61C 8/00

(54) **Dental implant assembly with internal connection**

(30) Priority: 06.11.2007 ES 200702913
(71) Applicant: Candel Amoros, Enrique, 08024 Barcelona (ES); De Medrano Reñe, Ignacio, 08024 Barcelona (ES); De Medrano Reñe, Javier, 08024 Barcelona (ES)
(72) Inventor: Candel Amoros, Enrique, 08024 Barcelona (ES); De Medrano Reñe, Ignacio, 08024 Barcelona (ES); De Medrano Reñe, Javier, 08024 Barcelona (ES)
(74) Representative: Isern-Jara, Nuria

(57) **Abstract**

Dental implant assembly with internal connection comprising an implant (1), a calcinable element (2), a damping element (3) of resilient material placed between said implant (1) and said calcinable element (2) and a set screw (4), characterized in that the upper part of the implant (1) includes an inner cavity intended to lodge the damping element (3) by means of a fitting engagement, wherein said damping element (3) includes an open cavity intended to lodge partially a calcinable element (2), and wherein a portion of the damping element (3) lodged inside the implant presents a polygonal plant.

## Description

### OBJECT OF THE INVENTION

The present patent application relates to a dental implant assembly with internal connection which incorporates remarkable innovations and advantages in comparison with other assemblies known in prior arts.

Briefly, the invention relates to a dental implant assembly providing an implant, a calcinable element, a resilient material damping element placed between said implant and said calcinable element with an inner connection and a set screw, improving damping properties.

### BACKGROUND OF THE INVENTION '

Nowadays, it is well known a wide range of dental implants, for example those provided with a damping element with the purpose to damage as leas as possible the bone. The applicant knows about the existence of implants or prosthetic devices which have a slightly conical damping element resting externally on the abutment (support piece), which it is conically fixed inside the implant.

Nevertheless, it has been observed that the fact of having an external damping connection has a series of disadvantages. One of such disadvantages is the fact that forces generated during mastication process and the fact that a dental piece without support on the walls can result in a screw loosening action or even a break.

In some cases, the above mentioned damping element presents an hexagon-shaped plant so it can become easily distorted in case of edges tear when the prosthesis is screwed on tight.

The existence of an invention with the characteristics described in this memory has not been disclosed in any implants or prosthetic devices documents.

### DESCRIPTION OF THE INVENTION

The present invention has been developed with the purpose to provide a dental implant to solve the above mentioned disadvantages, and to give other additional advantages which will be obvious from the following description.

Therefore, an object of the present invention is to provide a kind of dental implant assembly of inner connection comprising an implant, a calcinable element, a resilient material damping element placed between the implant and the calcinable element with an inner connection and a set screw, and it is mainly characterized in that the upper part of the implant includes an inner cavity to lodge the damping element by means of fitting engagement and such a damping element has an open cavity which partially lodges the calcinable element and wherein a portion of the damping element which is lodged inside the implant has a polygonal plant. The damping element expands as it bears forces both outside and inside the implant.

According another characteristic of the invention, the damping element has a slightly conical shape formed by a first cylindrical portion and a second portion with less diameter than the former and a triangular plant. This triangular configuration makes it very difficult to become distorted because angles and edges are very well defined, thus avoiding the risk of loosening and rotations in single implants.

Preferably, the implant itself presents a trunco-conical shape.

It is also a benefit of the invention to provide a damped implant assembly which has more rigidity and more resistance to wrench efforts in comparison to known implants in the prior art.

Another advantage with regard to implants in the prior art is that as the implant in the coronal part has a conical shape the gingiva seals around it and forms a physiological seal which avoids the existence of interspaces for bacteria.

Another characteristic of the invention is that a gasket fitted between the set screw and the calcinable element is created.

Preferably, side walls of the damping element cavity have an inclination angle between 0-25°, and side walls outside the area of the calcinable element in the cavity of the damping element have an inclination angle between 0-25°.

Another characteristics and advantages of the dental implant, object of the present invention, will be evident from the description of a preferred but not exclusive embodiment, which is illustrated as a non-limiting example of the accompanying drawings, where:

### BRIEF DESCRIPTION OF THE DRAWINGS

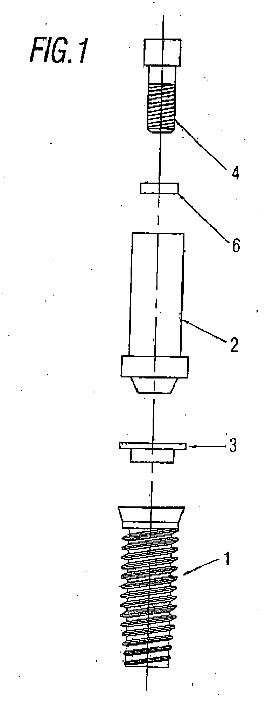

Figure 1.- It is an exploded elevational view of the different elements comprising the dental implant assembly with internal connection according to the present invention; and;

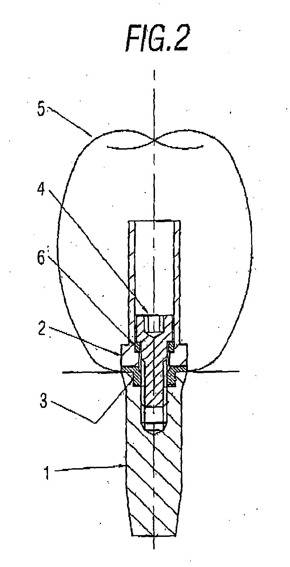

Figure 2 - It is a partially cross-section view of the dental implant assembly of the invention and a seat detachable element.

### DESCRIPTION OF A PREFERRED EMBODIMENT

As it is shown in the enclosed figures, a preferred embodiment of the dental implant assembly of the invention is essentially formed by a metal implant (1) placed at the lower part with a basically reversed trunco-conical shape, which is similar to natural roots, joined to the mandible bone, a calcinable element (2) formed by an elongated body with an opening passage provided with three clearly differentiated sections and where the false tooth rests (5), a damping element (3) of resilient material placed between such implant (1) and the calcinable element (2), a set screw (4) intended to be embedded within a hole disposed in the calcinable element (2) and a gasket (6) which fits between the set screw (4) and the calcinable element (2), being all the aforementioned components centered in relation to a middle longitudinal axis.

The upper part of the implant (1) includes an inner cavity intended to lodge the damping element (3) by means of a fitting engagement, wherein such damping element (3) has an upper open cavity which partially lodges the calcinable element (2) giving more stiffness. A portion of the damping element (3) which is lodged inside the implant has a polygonal plant.

More specifically, the damping element (3) has a slightly conical shape formed by a first cylindrical portion and a second portion with less diameter than the former portion with a triangular plant, which remains totally placed inside the implant (1) and this gives more resistance to the relative turn between the damping element (3) and the implant (1).

Side walls of the damping element cavity (3) have an inclination angle between 0-25°, and side walls outside the area of the calcinable element (2) in the cavity of the damping element have an inclination angle between 0-25°.

The details, shapes, dimensions and other additional elements, as well as the materials employed in the manufacture of the dental implant of the invention will be adequately substituted by others technically equivalent and essentially included in the scope defined by the claims of the invention, which are then expressly defined.

## Claims

1. Dental implant assembly with internal connection comprising an implant (1), a calcinable element (2), a damping element (3) of resilient material placed between said implant (1) and said calcinable element (2) and a set screw (4), **characterized in that** the upper part of the implant (1) includes an inner cavity intended to lodge the damping element (3) by means of a fitting engagement, wherein said damping element(3) includes an upper open cavity intended to lodge partially the calcinable element(2) and wherein a portion of the damping element(3) which is lodged inside the implant has a polygonal plant.

2. Dental implant assembly according to claim 1, **characterized in that** the damping system (3) has a slightly conical shape formed by a first cylindrical portion and a second portion of less diameter than the previous one with triangular plant.

3. Dental implant assembly according to claim 1, **characterized in that** the implant (1) has a slightly trunco-conical shape.

4. Dental implant assembly according to claim 1, **characterized in that** it comprises a gasket (6) that fits between the set screw (4) and the calcinable element(2).

5. Dental implant assembly according to claim 1, **characterized in that** side walls of the inner cavity of the damping element (3) have an inclination angle between 0-25°.

6. Dental implant assembly according claims 1 and 5, **characterized in that** side walls outside the area of calcinable element (2) which is lodged in the cavity of the damping element (3) have an inclination angle between 0-25°.
